# EUROPEAN PATENT SPECIFICATION

(11) **EP 2 281 969 B1**
(45) Date of publication and mention of the grant of the patent: **21.03.2012**
(21) Application number: 10425253.1
(22) Date of filing: 28.07.2010
(51) Int. Cl.: E04F 11/18, E06B 3/54

(54) **Modular clamp for panels**
Modulare Klammer für Platten
Pince modulaire pour plaques

(30) Priority: 28.07.2009 IT VI20090195
(43) Date of publication of application: 09.02.2011
(73) Proprietor: IND.I.A. S.P.A., 36034 Malo (VI) (IT)
(72) Inventor: Gonzato Bruno, 36034 Malo (VI) (IT)
(74) Representative: Iannone, Carlo Luigi

(56) References cited:
- EP-A2- 0 140 212
- DE-A1- 3 531 674
- DE-A1- 19 734 159

## Description

The present invention concerns a modular pliers for arranging technical furniture, protection and/or delimitation structures, such as for instance panelling, partition walls, parapets, stairs banisters and similar, mounted in rooms of buildings of various kinds, particularly for mounting to a bearing structural element positioned at the end of such a structure.

As known, specific technical structures currently mounted inside buildings for purposes of furniture, protection and/or delimitation, in general, comprise a plurality of panels or slabs, even made of materials with aesthetic quality and provided with a thickness of some relief, glass for instance, rigidly interconnected each other by means of a plurality of proper pliers, usually made of metal, such as glazed steel.

These pliers are fixed to the bearing uprights or columns, usually defining vertical directions and having quadrilateral or circular section, of the technical structure and house predetermined portions of the perimetric edge of two inner slabs adjacent and side-by-side each other contributing to the composition of the technical structure itself.

The pliers fixed to the outermost uprights, however, house predetermined portions of the perimetric edge only of the terminal slab.

In particular, according to a construction custom, two pliers per upright, one at the top and one at the bottom, are applied, providing four points of anchoring of the slab to the bearing structural elements of the technical structure.

More in detail, any pliers of the known type used for the applications of the kind considered herein include a support block having a pair of lateral seats opposite each other, communicating with the outside and suitable to firmly house a perimetric portion of two adjacent each other slabs of the technical structure, see e.g. EP 140 212 A2 and DE 197 34 159 A1.

Furthermore, the pliers include a strike washer, protruding from one of the side faces of the support block with respect to which is monolithic, which, in application conditions, is coupled through fastening means with the side wall of the reference upright of the technical structure.

Thereby combining the slabs with the pliers and the assembly thus formed with the vertical uprights the user obtains, therefore, the completion of a technical furniture, delimitation and/or protection structure provided with high rigidity and load bearing capacity. However, the pliers of the type just perfunctorily described, nowadays used to form a technical furniture, protection and/or delimitation structure comprising at least two side-by-side slabs, present some recognized drawbacks.

The main drawback of the known art is constituted by the rather broad range of pliers which are produced to fully and effectively meet all the operative requirements that may be found in the common practice. It is, in fact, reminded that the bearing structural elements used for the technical structures concerned, represented by an upright or column, to which the pliers are fixed, are commercially available in several versions, which differ each other in shape and sizes: sometimes they present quadrilateral, especially rectangular, section of various sizes, sometimes circular section with a diameter equal to 33.7 mm or 42.4 mm for example.

Therefore, just in order to allow the installer to apply appropriate pliers to the type of upright chosen, in the sector involved producers of pliers currently make available various pliers which differ each other for the size and shape of the strike washer, the constructive particular which, in applicative conditions, is placed close to the upright.

If one also considers that it is necessary to provide pliers suitable to receive predefined portions of the perimetric edge both of a single slab and two slabs, the number of pliers nowadays introduced into the market to set up any technical furniture, delimitation and/or protection structure reaches not negligible values, at least six, exceedingly high for the construction simplicity of the item here concerned. Such a situation, according to which there are as many pliers as the types of structural elements of the technical structure to which they are fixed, inevitably causes a less product standardization, with consequent loss of efficiency, and a proliferation of finished goods and related article codes, thereby increasing the complexity of managing finished goods inventory.

The present invention seeks to overcome the just complained drawbacks of the known technique.

In particular, primary purpose of the invention is to devise modular pliers for arranging technical furniture, protection and/or delimitation structures which allow a greater production standardization than the equivalent known technique.

In other words, primary purpose of the invention is to allow the completion of any technical furniture, protection and/or delimitation structure of the type that here concerns by means of pliers having a number of components, in absolute terms, lower than that one of the pliers of the known type.

Within this purpose, it is a task of the current invention to increase, compared to the state of the art, production efficiency related to the manufacture of modular pliers for arranging technical furniture, protection and/or delimitation structures.

It is another task of the present invention to simplify compared to the known technique the management of finished goods inventory related to pliers for arranging technical furniture, protection and/or delimitation structures, reducing the space and article codes intended to the constructive components belonging to them.

It is a last but not least purpose of the invention to give substance to modular pliers for arranging technical furniture, protection and/or delimitation structures of simple manufacture.

Said purposes are achieved through modular pliers for arranging technical furniture, protection and/or delimitation structures according to the attached claim 1, as hereinafter referred for the sake of brevity. Further technical features of detail of the modular pliers of the invention are contained in the subsequent dependent claims.

Advantageously, the invention allows to achieve some standardization in the production of pliers to arrange technical furniture, protection and/or delimitation structures, lacking, instead, in known pliers.

This thanks to the fact that some of the components of the pliers of the invention, that is the support block and strike washer, are two distinct pieces separated each other, one removably coupled with the other.

In particular, the support block of the pliers of the invention presents fixed constructive shape and universal use, which do not vary with the type of bearing structural element of the technical structure with which the pliers themselves must be firmly coupled.

The adjustment of the pliers to the type of bearing structural element of the technical structure is thus delegated to the strike washer, whose one side face presents a profile which from time to time follows the profile of the bearing structural element used. Therefore, the support block presents standard construction and is interchangeable in order to fit itself to any application situation, while the strike washer takes different shapes and sizes, depending on the operative and applicative needs.

It is thus clear as, by virtue of the foregoing, the present invention allows to increase compared to the known art production efficiency related to the manufacture of pliers for arranging technical furniture, protection and/or delimitation structures. Still advantageously, the invention allows to limit compared to the current state of the art the number of components and, consequently, article codes matched with pliers for arranging technical structures for the purpose of furniture, protection and/or delimitation, simplifying the finished goods inventory management relating to them.

Equally advantageously, the modular pliers of the invention is of simple production and application to the bearing structural element of the technical structure to be formed.

Said purposes and advantages, as well others that will emerge later, will appear to a greater extent from the following description related to preferred embodiments of the modular pliers of the invention, given by indicative and illustrative, but not limited to, way with the help of the attached drawings where:
- figure 1 is a partially exploded side view of the modular pliers of the invention without showing the plug;
- figure 2 is a plan view of a first constructive detail of figure 1;
- figure 3 is the view of figure 2 according to the cutting plane A-A;
- figure 4 is a plan view of a second constructive detail of figure 1;
- figure 5 is the view of figure 4 according to the cutting plane A-A;
- figure 6 is the cross section view of a third constructive detail of figure 1;
- figures 7 and 8 are cross section views of two executive variants of the particular of figure 6.

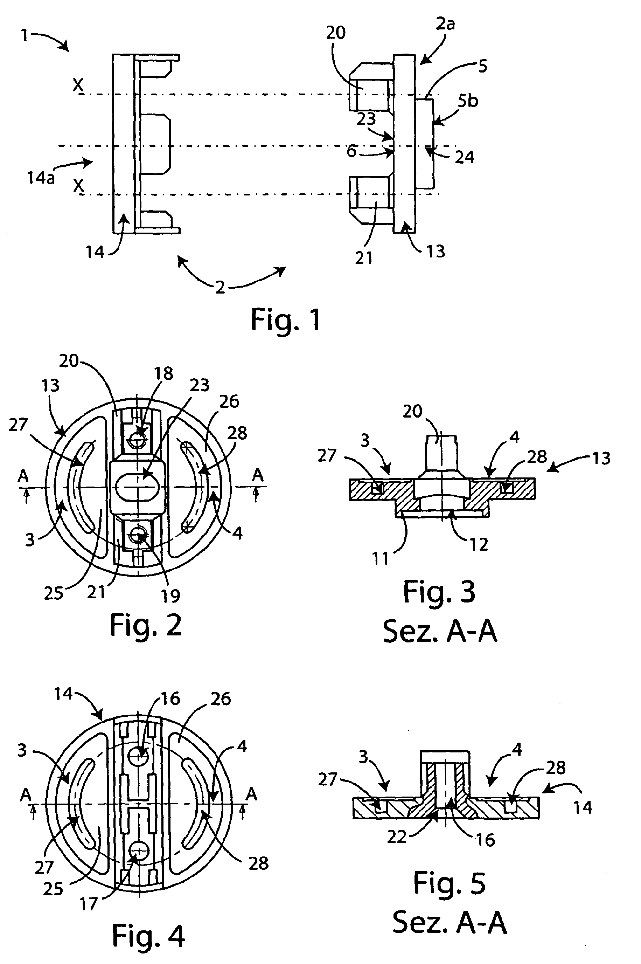

The modular pliers of the invention is illustrated without showing the plug in exploded view in figure 1 where it is globally numbered with 1: it is suitable for arranging technical furniture, protection and/or delimitation structures, not shown in the attached drawings for the sake of exhibition convenience and, for example, consisting of a stair banister, including bearing structural elements, or uprights, having quadrilateral regular profile.

As it is noted, the modular pliers 1 include a support block having a pair of lateral seats 3, 4 communicating with the outside, better visible in figures 2 and 4, each of which suit to firmly receive a perimetric portion of a slab, not represented and for example made of glass, belonging to the technical structure.

The modular pliers also include a strike washer 5, suitable to be coupled through fastening means, on the whole indicated with 6, with the side wall of a bearing structural element, or column, of the technical structure itself.

Therefore, since the support block 2 presents two lateral seats 3, 4, what's more opposite each other and equal in shape and sizes, the modular pliers 1 are suitable to be applied to one of the inner columns of the technical structure in order to house a perimetric portion of two adjacent and side-by-side slabs.

It is stated precisely that each of the lateral seats 3, 4 presents a width slightly greater than the thickness of the slab of the technical structure for its smooth introduction into it for the perimetric portion cited above.

According to the invention, the strike washer 5 is a piece distinct and separated from the support block 2 with which is removably and, in use conditions, firmly coupled in order to interpose itself between the same support block 2 and the bearing structural element of the technical structure.

In preferred but not exclusive way, the strike washer 5 is firmly coupled with the support block 2 through the fastening means 6 with which is coupled to the bearing structural element of the technical structure.

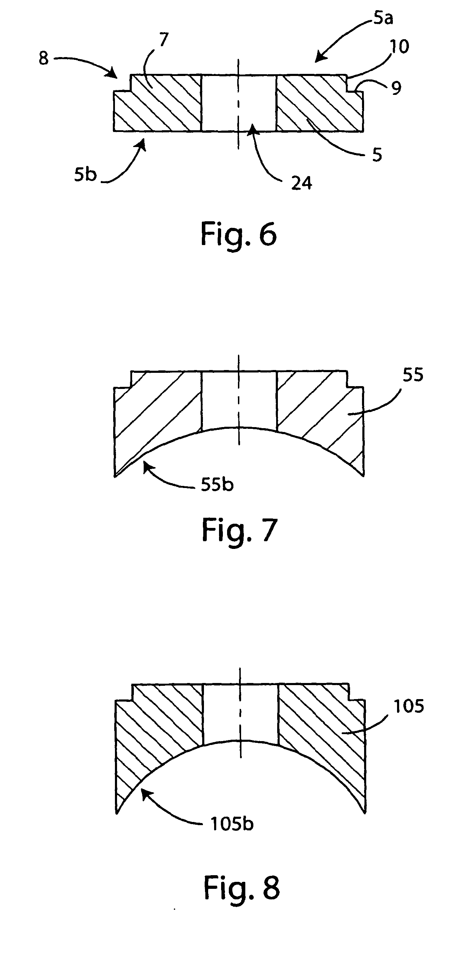

In particular, the strike washer 5, visible separately in figure 6, presents a first side face 5a positioned frontally close to and conjugated with the side surface 2a of the support block 2, and a second side face 5b, opposite to the first face 5a, suitable to be coupled with the side wall of the bearing structural element of the technical structure.

Preferably but not necessarily, the second side face 5b of the strike washer 5 presents in this case a linear profile in cross section, as said having assumed for the bearing structural element a quadrilateral, for example rectangular, regular profile.

Figure 6 also highlights that the striker washer 5 has a laminar metal strap 7 protruding from the first side face 5a and defining an annular step 8 composed of a first edge 9, arranged close to the side surface 2a of the support block 2, and a second edge 10, orthogonal to the first edge 9, arranged close to the perimetrical wall 11 delimiting a central groove 12 made in the lateral surface 2a of the support block 2 and into which the laminar metal strap 7 itself is housed by precision.

As shown in figure 6, the laminar metal strap 7 is actually monolithic with the strike washer 5 which remains outside the support block 2 when it is firmly coupled with the latter.

According to the preferred embodiment here described without reference to the plug of the invention, the support block 2 comprises a first shaped plate 13, coupled with the strike washer 5 through the fastening means 6 and having the central groove 12, as it can be derived from figure 3, and a second shaped plate 14, coupled with the first plate 13 in order to define the lateral seats 3, 4, through connecting means, only partly visible in figures 1-5 where they are overall indicated with 15.

Preferably, the connecting means 15 comprise a pair of screws, not shown, inserted into respective through holes 16, 17 made in the second shaped plate 14, and a pair of nut screws 18, 19 made in respective projecting teeth 20, 21 belonging to the first plate 13.

The nut screws 18, 19 communicate with the respective through holes 16, 17 with respect to which they are coaxial along the axis X.

More specifically, the through holes 16, 17 are partly countersunk starting from the outer surface 14a of the second plate 14, as figure 5 shows for the through hole 16, in order to define cone-truncated housings, of the type indicated with 22 in figure 5, where the flaring heads of the screws are received so that their upper face is coplanar with the outer surface 14a of the second plate 14.

As far the fastening means 6, with which the strike washer 5 is made integral not only with the side wall of the bearing structural element of the technical structure but also with the support block 2, are concerned, they include:
- screw means, not shown, suitable to penetrate into the bearing structural element of the technical structure;
- a first axial through hole 23, made centrally in the first shaped plate 13 and into which the screw means are inserted;
- a second axial through hole 24, made in the strike washer 5, coaxial and communicating with the first axial through hole 23 of the first plate 13, the screw means being also inserted into the second axial hole 24.

The central groove 12, where the laminar metal strap 7 is received, is coaxial and larger than the first axial through hole 23 of the first shaped plate 13 and the second axial through hole 24 of the strike washer 5. In preferred but not binding manner, the modular pliers 1 comprise stiffening means, not shown, contained in both the lateral seats 3, 4 of the support block 2 and coupled with two inner surfaces 25 and 26 opposite each other laterally demarcating each lateral seat 3, 4. More precisely, the stiffening means comprise a pair of shaped inserts made of elastically yielding material, for example rubber, which cooperate by contact with the perimetric portion of the two slabs contained in the lateral seats 3, 4 and are provided with coupling ribs, protruding from one of their side faces, forced into respective shaped notches 27, 28 made in the inner surfaces 25 and 26 which demarcate each of the lateral seats 3, 4, as well shown in figures 2-5.

It is understood that the profile of the shaped inserts is equal to the profile of the shaped notches 27, 28 in order to allow their mutual precision coupling. Figures 7 and 8 illustrate two executive variants of the strike washer of the modular pliers of the invention, indicated respectively with 55 and 105, which differ from that one yet described and indicated with 5 in particular for the profile of the respective second side face 55b, 105b which, as said, in applicative conditions, is positioned close to the side wall of the bearing structural element of the technical structure. In particular, the profile of the second side face 55b, 105b of the strike washers 55, 105 is concave-curved in cross section, constructive aspect that makes the related pliers suitable to be fixed on bearing structural elements, generally tubular, having a curved, in this case circular, profile.

More specifically, the strike washer 55 of figure 7 and strike washer 105 of figure 8 are suitable for bearing structural elements of circular profile having respectively an outer diameter of 33.7 mm and 42.4 mm. Moreover, the concavity of the profile of the second side face 55b, 105b of the strike washers 55, 105 allows to confer on the modular pliers of the invention a further significant constructive aspect.

Indeed, just by virtue of such a constructive trick, during completion of the technical structure, the strike washers 55, 105 can be oriented at will on the circular bearing structural element, not only on the basis of the various applicative requirements but also the constraints or structural impediments in the room where the technical structure itself is mounted.

The modular pliers comprising strike washers of the type indicated with 55 and 105 can be applied to a vertical load-bearing structural element, namely an upright, so that the slabs coupled with them follow as closely and precisely as possible any changes in the reference surface on which a technical furniture, protection and/or delimitation structure must be arranged.

That being insufficient, the modular pliers including the strike washers 55 or 105 may be advantageously fixed not only to vertical uprights but also, for example, to horizontal uprights of the technical furniture, protection and/or delimitation structure, allowing to fix the slabs from the top and from the bottom and not only laterally, as it typically occurs in the known art.

Furthermore, fixing of the pliers on not necessarily vertical uprights allows in case of need to orient or tilt the slabs according to planes suitable to better and more precisely track the development and profile of the reference surface on which the technical structure must be mounted, therefore improving the overall aesthetic impact of the application.

Under operating conditions, assuming the modular pliers 1 are applied to a bearing structural element, usually a vertical upright, placed inside and not at the terminal part of the technical furniture, protection and/or delimitation structure, the operations performed occur substantially in accordance with the modes hereinafter explained.

Firstly, the operator places the strike washer 5 in the desired position, suitable to obtain a correct and proper final configuration of the technical structure concerned, close to the side wall of the bearing structural element.

Secondly, the operator approaches the strike washer 5 to the first shaped plate 13 of the support block 2, inserting the laminar metal strap 7 into the central groove 12, and, afterwards, through the fastening means 6, firmly couples together the strike washer 5 and first shaped plate 13.

Once the application of the stiffening means to the inner surfaces 25 and 26 delimiting the lateral semi-seats 3, 4 has taken place, forcing the coupling ribs of two shaped inserts into the shaped notches of the inner surfaces 25, 26 of the first plate 13, the operator couples the second shaped plate 14, also provided with its own stiffening means in the lateral semi-seats 3, 4, with the first shaped plate 13 through the connecting means 15.

In such a way, joining the two shaped plates 13, 14, the operator forms the support block 2 defining in a full and effective manner the lateral seats 3, 4.

At that point, the operator places a predetermined perimetric portion of one of the slabs, made of glass for instance, in the lateral seat 3 of the modular pliers 1 and, once reached the exact position of the slab, acts on part of the screw means of the connecting means 15 in order to definitely and completely couple them with the nut screw 18 of the protruding tooth 20 and fixing the first slab to the vertical bearing structural element.

The use of the modular pliers including the strike washers 55 and 105 is substantially the same as that one described for the modular pliers 1, with the addition of the operative advantages highlighted before.

On the basis of the disclosure just given, it is understood, therefore, that the modular pliers for arranging technical furniture, protection and/or delimitation structures of the invention reach the purpose and achieve the advantages previously mentioned.

The pliers mounted on the bearing end structural element includes a support block having two lateral seats: the lateral side remained free is then conveniently closed with a shaped finishing plug which gives structural continuity and linearity to the modular pliers quite pleasant from the aesthetic point of view.

In addition, embodiments of the invention may exist in which the fastening means used to firmly connect the strike washer to the outer wall of the bearing structural element of the technical structure involved are different from those ones described above, which does not affect the advantage brought by the present invention.

Moreover, in other constructive embodiments of the invention the support block could present a different composition from that one previously highlighted and shown in the drawings that follow.

## Claims

1. Modular pliers (1) for mounting to a bearing structural element positioned at the end of technical furniture, protection and/or delimitation structures said modular pliers comprising a support block (2) which presents a pair of lateral seats (3, 4) opposed each other and communicating with the outside, one of which suitable to firmly house a perimetric portion of a terminal slab belonging to a technical structure, and a strike washer (5; 55; 105), suitable to be coupled through fastening means (6) with the side wall of a bearing structural element of said technical structure, said strike washer (5; 55; 105) being a piece distinct and separated from said support block (2) with which it is firmly and removably coupled in order to interpose itself between said support block (2) and said side wall of said bearing structural element of said technical structure, **characterized in that** the second lateral seat of said pair of lateral seats (3, 4) is closed with a finishing shaped plug suitable to give structural continuity and linearity to said pliers (1).

2. Pliers (1) as claim 1) **characterized in that** said strike washer (5; 55; 105) is firmly coupled with said support block (2) by said fastening means (6).

3. Pliers (1) as claim 1) or 2) **characterized in that** said strike washer (5; 55; 105) presents a first side face (5a), positioned frontally close to and conjugated with the side surface (2a) of said support block (2), and a second side face (5b; 55b; 105b), opposite to said first face (5a), suitable to be coupled with said side wall of said bearing structural element of said technical structure.

4. Pliers (1) as claim 3) **characterized in that** said second side face (5b) of said strike washer (5) presents a linear profile in cross section.

5. Pliers as claim 3) **characterized in that** said second side face (55b, 105b) of said strike washer (55, 105) presents a curved concave profile in cross section.

6. Pliers (1) as any of the previous claims **characterized in that** said strike washer (5; 55; 105) presents a laminar metal strap (7) protruding from said first side face (5a) and defining an annular step (8) composed of a first edge (9), arranged close to said side surface (2a) of said support block (2), and a second edge (10), orthogonal to said first edge (9), arranged close to the perimetrical wall (11) delimiting a central groove (12) made in said side surface (2a) of said support block (2) and into which said laminar metal strap (7) is housed.

7. Pliers (1) as any of the previous claims **characterized in that** said support block (2) comprises a first shaped plate (13), coupled with said strike washer (5; 55; 105) through said fastening means (6) and having said central groove (12), and a second shaped plate (14), coupled with said first plate (13) through connecting means (15) in order to define said lateral seats (3, 4).

8. Pliers (1) as claim 7) **characterized in that** said fastening means (6) include:
- screw means suitable to penetrate into said bearing structural element of said technical structure;
- a first axial through hole (23), made in said first shaped plate (13), into which said screw means are inserted;
- a second axial through hole (24), made in said strike washer (5), coaxial and communicating with said first axial through hole (23) of said first plate (13), said screw means being inserted into said second axial through hole (24).

9. Pliers (1) as the claim 8) **characterized in that** said central groove (12) is coaxial and larger than said first axial through hole (23) of said first shaped plate (13) and said second axial through hole (24) of said strike washer (5).

10. Pliers (1) as any of the previous claims **characterized in that** each of said lateral seats (3, 4) presents a width slightly greater than the thickness of said slab of said technical structure.

11. Pliers (1) as any of the previous claims **characterized in that** it includes stiffening means, contained in at least one of said lateral seats (3, 4) of said support block (2) and coupled with two inner surfaces (25, 26) opposite each other laterally delimiting each of said lateral seats (3, 4).

## Patentansprüche

1. Modularklammer (1) zur Montage an ein Lagerstrukturelement, positioniert am Ende technischer Möbel-, Schutz-und/oder Begrenzungsstrukturen, wobei die Klammer einen Halteblock (2) umfasst, der ein Paar lateraler Sitze (3, 4) darstellt, die einander gegenüber stehen und mit der Außenseite kommunizieren, wobei einer davon geeignet ist, um einen perimetrischen Abschnitt einer Anschlussplatte fest zu beherbergen, die zu einer technischen Struktur gehört, und eine Angriffsscheibe (5; 55; 105), geeignet, um durch Festmachmittel (6) mit der Seitenwand eines Lagerstrukturelements der technischen Struktur gekoppelt zu werden, wobei die Angriffsscheibe (5; 55; 105) ein Teil ist, distinkt ausgebildet und separiert von dem Halteblock (2), mit dem es fest und entfernbar gekoppelt wird, um selbst zwischen dem Halteblock (2) und der Seitenwand des Lagerstrukturelements der technischen Struktur eingefügt zu sein, **dadurch gekennzeichnet, dass** der zweite laterale Sitz des Paars lateraler Sitze (3, 4) geschlossen wird mit einem Abschlussformstöpsel, geeignet, um der Klammer (1) strukturelle Kontinuität und Linearität zu verleihen.

2. Klammer (1) gemäß Anspruch 1), **dadurch gekennzeichnet, dass** die Angriffsscheibe (5; 55; 105) fest gekoppelt ist mit dem Halteblock (2) durch die Festmachmittel (6).

3. Klammer (1) gemäß Anspruch 1) oder 2), **dadurch gekennzeichnet, dass** die Angriffsscheibe (5; 55; 105) eine erste Seitenfläche (5a) darstellt, positioniert frontal nahe zu und konjugiert mit der Seitenfläche (2a) des Halteblocks (2), und eine zweite Seitenfläche (5b; 55b; 105b), gegenüberstehend der ersten Fläche (5a), geeignet, um mit der Seitenwand des Lagerstrukturelements der technischen Struktur gekoppelt zu werden.

4. Klammer (1) gemäß Anspruch 3), **dadurch gekennzeichnet, dass** die zweite Seitenfläche (5b) der Angriffsscheibe (5) ein Linearprofil im Querschnitt darstellt.

5. Klammer gemäß Anspruch 3), **dadurch gekennzeichnet, dass** die zweiten Seitenfläche (55b, 105b) der Angriffsscheibe (55, 105) ein gekrümmtes konkaves Profil im Querschnitt darstellt.

6. Klammer (1) gemäß einem der vorhergehenden Ansprüche, **dadurch gekennzeichnet, dass** die Angriffsscheibe (5; 55; 105) einen Laminarmetallgurt (7) darstellt, vorragend von der ersten Seitenfläche (5a) und definierend eine ringförmige Stufe (8), zusammengesetzt aus einer ersten Kante (9), angeordnet nahe zu der Seitenfläche (2a) des Halteblocks (2), und einer zweiten Kante (10), orthogonal zu der ersten Kante (9), angeordnet nahe zu der perimetrischen Wand (11), eingrenzend eine Zentralnut (12), ausgebildet in der Seitenfläche (2a) des Halteblocks (2) und in der der Laminarmetallgurt (7) beherbergt wird.

7. Klammer (1) gemäß einem der vorhergehenden Ansprüche, **dadurch gekennzeichnet, dass** der Halteblock (2) ein erstes geformtes Plattenelement (13) umfasst, gekoppelt mit der Angriffsscheibe (5; 55; 105) durch die Festmachmittel (6) und aufweisend die Zentralnut (12), und ein zweites geformtes Plattenelement (14), gekoppelt mit dem ersten Plattenelement (13) durch Verbindungsmittel (15), um die lateralen Sitze (3, 4) zu definieren.

8. Klammer (1) gemäß Anspruch 7), **dadurch gekennzeichnet, dass** die Befestigungsmittel (6) umfassen:
- Schraubmittel, geeignet, um in das Lagerstrukturelement der technischen Struktur einzudringen;
- ein erstes Axialdurchgangsloch (23), ausgebildet in dem ersten geformten Plattenelement (13), in das die Schraubmittel eingefügt werden;
- ein zweites Axialdurchgangsloch (24), ausgebildet in der Angriffsscheibe (5), koaxial und kommunizierend mit dem ersten Axialdurchgangsloch (23) des ersten Plattenelements (13), wobei die Schraubmittel eingefügt werden in das zweite Axialdurchgangsloch (24).

9. Klammer (1) gemäß Anspruch 8), **dadurch gekennzeichnet, dass** die Zentralnut (12) koaxial ist und größer ist als das erste Axialdurchgangsloch (23) des ersten geformten Plattenelements (13) und das zweite Axialdurchgangsloch (24) der Angriffsscheibe (5).

10. Klammer (1) gemäß einem der vorhergehenden Ansprüche, **dadurch gekennzeichnet, dass** jeder der lateralen Sitze (3, 4) eine Breite darstellt, geringfügig größer als die Dicke der Platte der technischen Struktur.

11. Klammer (1) gemäß einem der vorhergehenden Ansprüche, **dadurch gekennzeichnet, dass** sie Versteifungsmittel umfasst, enthalten in zumindest einem der lateralen Sitze (3, 4) des Halteblocks (2) und gekoppelt mit zwei inneren Flächen (25, 26), die einander lateral gegenüberstehen, begrenzend jeden der lateralen Sitze (3, 4).

## Revendications

1. Pinces modulaires (1) pour le montage sur un élément structurel porteur positionné à l'extrémité de structures de meubles, de protection et/ou de délimitation techniques, lesdites pinces modulaires comprenant un bloc de support (2) qui présente une paire de sièges latéraux (3, 4) opposés l'un à l'autre et communiquant avec l'extérieur, l'un d'entre eux étant approprié pour renfermer fermement une partie périphérique d'une dalle terminale appartenant à une structure technique, et une rondelle d'impact (5 ; 55 ; 105), appropriée pour être couplée par l'intermédiaire de moyens de fixation (6) à la paroi latérale d'un élément structurel porteur de ladite structure technique, ladite rondelle d'impact (5 ; 55 ; 105) étant une pièce distincte et séparée dudit bloc de support (2) auquel elle est couplée de façon ferme et amovible de façon à s'interposer entre ledit bloc de support (2) et ladite paroi latérale dudit élément structurel porteur de ladite structure technique, **caractérisées en ce que** le deuxième siège latéral de ladite paire de sièges latéraux (3, 4) est fermé avec un bouchon formé de finition approprié pour communiquer une continuité et une linéarité structurelles auxdites pinces (1).

2. Pinces (1) selon la revendication 1, **caractérisées en ce que** ladite rondelle d'impact (5 ; 55 ; 105) est fermement couplée audit bloc de support (2) par lesdits moyens de fixation (6).

3. Pinces (1) selon la revendication 1 ou 2, **caractérisées en ce que** ladite rondelle d'impact (5 ; 55 ; 105) présente une première face latérale (5a), positionnée de façon frontale à proximité de la surface latérale (2a) dudit bloc de support (2) et de façon conjuguée à celle-ci, et une deuxième face latérale (5b ; 55b ; 105b), opposée à ladite première face (5a), appropriée pour être couplée à ladite paroi latérale dudit élément structurel porteur de ladite structure technique.

4. Pinces (1) selon la revendication 3, **caractérisées en ce que** ladite deuxième face latérale (5b) de ladite rondelle d'impact (5) présente un profil linéaire en coupe transversale.

5. Pinces (1) selon la revendication 3, **caractérisées en ce que** ladite deuxième face latérale (55b, 105b) de ladite rondelle d'impact (55, 105) présente un profil concave incurvé en coupe transversale.

6. Pinces (1) selon l'une quelconque des revendications précédentes, **caractérisées en ce que** ladite rondelle d'impact (5 ; 55 ; 105) présente une bande métallique laminaire (7) qui fait saillie à partir de ladite première face latérale (5a) et qui définit un épaulement annulaire (8) constitué par un premier bord (9), situé à proximité de ladite surface latérale (2a) dudit bloc de support (2), et un deuxième bord (10), orthogonal audit premier bord (9), situé à proximité de la paroi périphérique (11) délimitant une rainure centrale (12) réalisée dans ladite surface latérale (2a) dudit bloc de support (2) et dans laquelle est logée ladite bande métallique laminaire (7).

7. Pinces (1) selon l'une quelconque des revendications précédentes, **caractérisées en ce que** ledit bloc de support (2) comprend une première plaque formée (13), couplée à ladite rondelle d'impact (5 ; 55 ; 105) par l'intermédiaire desdits moyens de fixation (6) et comportant ladite rainure centrale (12), et une deuxième plaque formée (14), couplée à ladite première plaque (13) par l'intermédiaire de moyens de liaison (15), de façon à définir lesdits sièges latéraux (3, 4).

8. Pinces (1) selon la revendication 7, **caractérisées en ce que** lesdits moyens de fixation (6) comprennent :
- des moyens formant vis appropriés pour pénétrer à l'intérieur dudit élément structurel porteur de ladite structure technique ;
- un premier trou traversant axial (23), réalisé dans ladite première plaque formée (13), dans lequel sont insérés lesdits moyens formant vis ;
- un deuxième trou traversant axial (24), réalisé dans ladite rondelle d'impact (5), coaxial audit premier trou traversant axial (23) de ladite première plaque (13) et communiquant avec celui-ci, lesdits moyens formant vis étant insérés à l'intérieur dudit deuxième trou traversant axial (24).

9. Pinces (1) selon la revendication 8, **caractérisées en ce que** ladite rainure centrale (12) est coaxiale audit premier trou traversant axial (23) de ladite première plaque formée (13) et audit deuxième trou traversant axial (24) de ladite rondelle d'impact (5), et plus grande que ceux-ci.

10. Pinces (1) selon l'une quelconque des revendications précédentes, **caractérisées en ce que** chacun desdits sièges latéraux (3, 4) présente une largeur légèrement supérieure à l'épaisseur de ladite dalle de ladite structure technique.

11. Pinces (1) selon l'une quelconque des revendications précédentes, **caractérisées en ce qu'**elles comprennent des moyens de raidissage, contenus dans au moins l'un desdits sièges latéraux (3, 4) dudit bloc de support (2) et couplés à deux surfaces intérieures (25, 26) opposées l'une à l'autre, délimitant latéralement chacun desdits sièges latéraux (3, 4).
